(19) Europäisches Patentamt
European Patent Office
Office européen des brevets

(11) **EP 4 043 875 A1**

(12) **EUROPEAN PATENT APPLICATION**

(43) Date of publication:
**17.08.2022 Bulletin 2022/33**

(21) Application number: **21156771.4**

(22) Date of filing: **12.02.2021**

(51) International Patent Classification (IPC):
**G01N 29/02** (2006.01)     **B82Y 15/00** (2011.01)
**G01N 29/036** (2006.01)     **H01L 41/113** (2006.01)

(52) Cooperative Patent Classification (CPC):
**G01N 29/022; G01N 29/036; H01L 41/1132;**
B82Y 15/00; G01N 2291/0256

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Meilleur Temps
2000 Neuchâtel (CH)**

(72) Inventor: **SEMON, Guy
2000 NEUCHATEL (CH)**

(74) Representative: **IP Trust
2, rue de Clichy
75009 Paris (FR)**

(54) **MOLECULAR DETECTOR BASED ON OSCILLATOR WITH NANOSTRUCTURE**

(57)     Molecular detector 30 comprising :
- A oscillator 16;
- A nanostructure 11 located on a surface of the oscillator 16;
- A frequency counter configured to measuring a frequency change as a function of a mass change of the oscillator in response to a mass loading effect of target molecules 33 on the nanostructure 11, as a media 32 comprising the target molecules 33 flow into and through the nanostructure 11, the media 32 comprising at least one of a gas or a liquid;
- Wherein the nanostructure comprises a three-dimensional (3D) nanoporos mass with a surface area per volume of at least 50 $M^2/_{cm}^3$,
- Wherein the 3D nanoporos mass forms a single/monolithic solid structure with a partial infiltration coating 13 so that the internal motion is eliminated to minimize internal energy dissipation in the media.

FIG.4

## Description

Background of the invention

The actual molecular detection method uses different techniques to realize the detection of a certain amount of molecules in gaseous or liquid media in order to ensure its presence, to certify its nature and possibly to measure its mass or its concentration. Molecular detection is a fairly recent science, the intrinsic performance of which depends very much on the means of capture and analysis. Generally, a measurement system consists of a sensor, an analyzer and a processing and restitution unit. Sometimes, a unit of recognition or equivalence is added, especially in the case of olfactory treatment. It can also be associated with the system of post-processors using artificial intelligence. Many types of sensors exist, for example, piezoelectric sensors, electrochemical sensors, mass spectrometry, gas chromatography, photo ionization, etc. They can be used in an extremely wide field of chemical aerosol analyzes, for example, the corpuscular analysis, organic or inorganic, the evolution of an olfactory life cycle, electronic nose or tongue, cell detection, Identification, certification of substances, states, thresholds... The fields of application are very numerous : medicine, environment, agriculture, chemistry, security etc., obviously all areas related to living things are concerned.

The present invention relates to the field of mechanical resonance-based sensors for use in detecting the presence of molecules in a gas or a liquid environment. The technique of mechanical resonance based detection and sensing at micro/nano scales has been shown to be capable of achieving quite high resolution, for example, the micromachined quartz crystal microbalance (QCM). The concept of mass measurement quartz oscillators is presented by the Sauerbrey relation, which relates the frequency change $\Delta f$ to the mass change $\Delta m$ of the oscillator by a coefficient A.

$$\Delta f = -A * \Delta m$$

For a quartz oscillator in a stable state, which is excited for example by means of an electrical signal, any mass attached to the oscillator surface affects the frequency. Thus, the molecular mass is determined by measuring the frequency shift.

In US7814776 a method is developed for increasing the quality factor of the QCM, which comprises adding a layer of nanotubes to the sensor to increase the quality factor, and placing the nanotube-coated device in a vacuum chamber for a period of time to further increase the quality factor. More specifically, the single-walled carbon nanotube (SWNTs) solution is prepared and sprayed over the QCM surface to form a layer of SWNTs. The arrangement of the nanotubes is a 2D layer of mat of nanotubes, which are laying down like cut trees on the surface of the QCM. The table 1 shows that the Q-factor increases from the original value of the uncoated device when measured in vacuum. However, the Q-factor decreases when measured in air.

This technic has several draw-backs. In order to detect the mass in the scale of femtogram, it is necessary to have a very high Q factor. Because the dissipation reduces the quality factor of the oscillator, it is necessary to eliminate the dissipation. Normally, the dissipation may result both from viscous friction generated by the interaction between the gas or fluid media and the sensor, and also from losses due to internal motion of the sensor internal structure. This method has chosen to minimize of the viscous damping by operating the system in the vacuum, which has largely limited the use condition of the sensor. In addition, this technic uses only a layer of the nanotubes to coat the surface in order to minimize the internal motion of the nanostructure. However, a simple layer of the nanotubes presents only very limited surface area, which only traps a tiny amount of target molecules. Thus, this technic is only suitable for measuring the mass in a very limited range, e.g. femtogram scale.

US10495607 describes a dissipation-based sensor includes a single oscillator with a nano-structured surface, made from nanotubes or nanorods. The sensor exhibits improved sensitivity, up to about 2 orders of magnitude higher than a single oscillator without a nano-structured surface. The sensor operates by measuring and estimating the fluid friction per oscillation cycle, operating in normal conditions without vacuum (e.g., in air or other ambient gas) at room temperature.

This technic uses an impedance analyzer to measure dissipation response of the oscillator. Normally, the dissipation results from viscous friction generated by the interaction between the gas or fluid media and the sensor. This system cannot be looked upon as mutual addition of individual viscous forces of N rods, where the viscous friction computed with Stokes formulation considers each rod to be independent of the other in an infinite fluid medium. The system is a global ensemble of coupled slow moving oscillators, where the mutual phase relations between the nearest neighbors govern the overall viscous friction. Entrainment of random ordered vibrating structures produce an in-phase motion coupling of the nearest neighbors, achieving a dynamic ordered/stable state. Such an entrained system thus becomes less prone to damping effects.

However, the dissipation may result from losses due to internal motion of the nanotubes. In the fluid-nanostructure interaction, the random out of phase motion of the nanotubes still contribute to a large dissipation.

Summary of the invention

Therefore, it is a primary object, feature, or advantage of the present invention to improve upon the state of the art to have a sensor that has small dissipation when used in gas or liquid environment to detect the molecules. The interaction between the gas or liquid media and the sensor generates the viscous friction, which decreases the Q-factor. Firstly, the present invention aims to minimize dissipation by optimizing the oscillator to have a better aeroelastic behavior, thus limiting the viscous friction and reducing the dissipation. Secondly, the present invention aims to minimize dissipation by infiltrating the nanostructure to lock the nanostructure together, thus freezing the internal motion of the nanostructure and reducing the dissipation. By minimizing dissipation, a large degradation of the Q-factor is prevented. Thirdly, the present invention propose to augment significantly the surface area of the oscillator by using a nanoporous mass instead of a lay of single wall nanotubes. The nanoporous mass is realized by growing a three-dimensional (3D) forest of nanotubes or nanorods with a large surface area per volume ratio. Although the quality Q-factor degrades by adding mass and volume, this decrease in Q-factor is strongly offset by the significantly increased surface area. It is intended to increase the resolution of the ultimate sensor by dramatically increasing the surface area by an estimated factor of $10^4$-$10^7$, which should roughly increase the resolution by the same amount. The surface of the infiltrated 3D forest of nanotubes can be made functionalized so that the largely augmented surface can trap selectively target molecules.

In a newly grown-up nanotube forest, the nanotubes are standing up like a forest of trees that have interwoven branches. When they interact with the air or liquid, they band back and forth and touch each other quite a lot, which cause a decrease in quality factor. With the infiltrating, the 3D nanotube structure becomes a single solid structure in binding the nanotubes together wherever they touch. Thus, the internal movement is locked and frozen to decrease the dissipation and to increase the quality factor.

Thus, the solution comprises to optimize the oscillator shape to have an ideal aeroelastic behavior, to cultivate a 3D nanotubes forest with large surface area to volume ratio and to infiltrate the 3D forest nanotubes/nanorods. Optionally, the forest can be burned out using oxygen or water at high temperature to further increase the surface area and to decrease the mass of the oscillator.

By locking the nanostructure, molecules can still diffuse in and adsorb, but the air largely moves as a global whole. If the diffusion speed is too low, additional pores can be added on the nanostructure out of the plane of motion to reduce diffusion length.

Locking the nanostructure together also greatly simplifies the process of transferring and adhering the nanostructure to a oscillator. The alternative option would be to grow the nanostructure directly onto the oscillator.

Brief summary of the invention

The present invention concerns a molecular detector comprising :

- A oscillator ;

- A nanostructure located on a surface of the oscillator ;

- A resonant mass measurement analyzer configured to measuring a frequency change as a function of a mass change of the oscillator in response to a mass loading effect of target molecules on the nanostructure, as a media comprising the target molecules flow through the nanostructure, the media comprising at least one of a gas or a liquid.

The nanostructure comprises three-dimensional (3D) nanoporos mass with a surface area per volume of at least 50 $M^2/cm^3$, and the 3D nanoporos mass forms a single/monolithic solid structure with partial infiltration so that the internal motion is eliminated to minimize internal energy dissipation.

The invention concerns a plurality of variation, which includes the following modes of realization either alone or in combination.

- the 3D nanoporos mass is made of a matrix of nanotubes or nanorods realized in the material among carbon, boron nitride, silicon.
- the 3D nanoporos mass is made of a vertically aligned carbon nanotubes arrays (VANTAs).
- the partial infiltration is to infiltrate the 3D nanoporos mass by a material selected among metal oxides (TiO2), ceramics (Si), polymers, metals (Ni), other allotropic forms of carbon.
- the partial infiltration is to coat the side walls and to fill partially the free space between the interior side walls of the 3D nanoporos mass so that 4% - 80% of the nanostructure's total internal volume is fulfilled with infiltration coating.
- the 3D nanoporos mass has a controllable porosity by controlling the diameter of the nanotubes/nanorobes, the pitch between the nanotubes/nanorobes, the thickness of the infiltrated coating on the nanotubes.
- the nanostructure is with a surface area per volume of least 500 $M^2/cm^3$ by superimposing multi-layers of infiltrated 3D nanoporos masses.
- the oscillator is a high-quality factor mechanical oscillator.
- the oscillator comprises a quartz crystal cantilever system.
- the oscillator is fabricated using a monolithic structure made from a fully infiltrated matrix of nanotubes or nanorods (In this case the mass will be low and the frequency high to improve the quality factor).
- the nanostructure is grown directly on the oscillator and is fixed permanently on the oscillator.
- the nanostructure is fixed on the surface of the oscillator by a technique selected from chemical bonding, vacuum deposition, pop-up folding and in situ growth.

- nano resistors are integrated into or on the surface of the nanostructure to heat or to measure the temperature of the mass, which provides a dynamic temperature compensation and temperature control.
- Heating can also be realized by radiation using infrared or microwave illumination. This radiative heating can be combined with temperature sensing, either by radiation or using nanoresistors, to dynamically control the temperature.
- the 3D nanoporos mass is made functionalized to selectively trap the target molecules in the media.
- the target molecules are water, proteins, disease marker, aroma compounds, explosives pollutants, glucose, alcohols.
- each of the N molecular detectors traps the same kind of target molecules so that the data of the N molecular detectors allows a statistical processing of the analysis (sampling).
- each of the N molecular detectors traps at least one different kind of target molecules, so that the N molecular detectors are assembled together forming a multi-molecules detector.
- the N molecular detectors possess different surface chemical properties to present different levels of responses to different kinds of single molecule, so that the collective behavior of the N molecular detectors gives additional analysis result than the N.

Brief description of the drawings

FIG.1 is a cross sectional diagram of a nanostructure attached to an end surface of an oscillator;
FIG.2 is a cross sectional diagram of a nanostructure with two super imposed infiltration layers;
FIG.3 is a diagram of an oscillator control system;
FIG.4 is a diagram of heat compensation.

Detailed description of the preferred embodiment

It is to be understood that both the foregoing general description and the following detailed description are illustrative and explanatory, and are not restrictive. The section headings used herein are for organizational purposes and are not to be construed as limiting the subject matter described.

Nanostructure

It is possible to use the nanostructure in US10495607 that includes a plurality of ZnO nanorods grown on one of the electrode surfaces of the oscillator. It is also possible to grow a nanostructure on a separated substrate as explained in the following paragraphs.
The nanostructure is fabricated by a chemical vapor deposition process on a support. A silicon wafer is used as a support, on which a layer of aluminum oxide ($Al_2O_3$) is deposited with a depth of tens of nanometers. With this $Al_2O_3$ layer, the grown-up nanostructure can be detached from the support after manufacture and be implemented to the oscillator surface. By a method of photolithography, the pattern of the nanostructure represented by a two-dimensional drawing engraved on a mask is printed to the surface of the $Al_2O_3$ layer. By negative printing, iron atoms are deposited as catalyst in the form of microdroplets on the pattern to form a thickness of 1 to 50 nm. The size of the droplets is essential for the successful completion of the catalytic reaction. The pattern of the nanostructure is thus realized in the layer of iron atoms. For the catalytic reaction, it is possible to use other metals as cobalt, nickel ...etc. to replace iron. The treated wafer with the pattern is placed in a closed and heating chamber called a reactor. The operation can be carried out under controlled atmosphere conditions. At a temperature from 700°C to 1000°C, a carbonaceous precursor gas is injected, in this case ethylene (C2H4) inside a vector stream formed of hydrogen. A "cracking" separation reaction between the carbon and hydrogen atoms then takes place. Carbon atoms that have a high activation energy allow a heterogeneous catalytic reaction on the surface of iron atoms to bring the carbon atoms from the gas phase to the solid phase and to grow the carbon nanotubes in the direction perpendicular to the plane of the substrate. The reaction is continued until the desired growth height is achieved for the carbon nanotubes forest. The lithography method gives a big flexibility in defining the shape of the iron catalyst, which allows to grow a matrix of vertically aligned carbon nanotubes (VACNT) in the ideal shape for a better aeroelastic behavior and for applying to a oscillator.

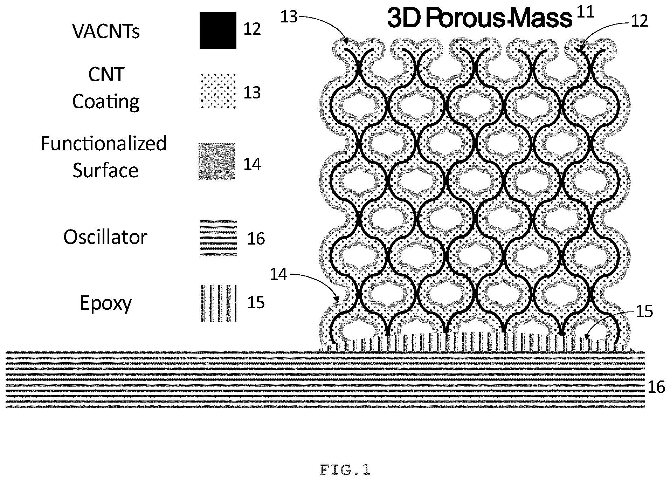

The process of chemical vapor deposition can produce tubular matrices with nanotubes, which offer an unrivaled surface/mass or surface/dimensions ratio. The fabricated nanotubes have the diameter around tens of nanometers and the length over 100 microns. The aspect ratio of height/diameter is greater than 500: 1, and the surface/diameter ratio can reach 10,000 and more. For comparison, the same ratio for a roll of household aluminum foil is 1. The nanostructure thus obtained represents a porosity greater than 90%. The figure 1 illustrates a sectional view of the nanostructure composed of matrices of carbon nanotubes that are not strictly rectilinear but resemble the crossed branches of the trees. Depending on the From a mechanical point of view, they have a very high longitudinal modulus of elasticity, theoretically being able to reach the Tpa and conversely in the transverse plane this same modulus is of the order of 5 to a few tens of Gpa. The nanotubes thus formed are natively of the multi-wall type (MWCNT) (several nested within each other). In a more elaborate form it is possible to generate single wall tubes (SWCNT). In an alternative embodiment, it is possible to use nanotubes/nanowires of boron nitride or silicon. The exact forms of the nanotube matrices vary according to the used material.

Partial infiltration

Based on the obtained nanostructure, a partial infiltration operation can be realized by using materials of different types and composition (ceramics, metals etc). An example is given here in infiltration using amorphous / graphitic carbon in using a reaction of the same type as explained before with vectorized ethylene and argon. The infiltrated graphite is of the SP2 or SP3 type, and is measured by means of X-ray spectroscopy or by transmission electron microscopy (TEM). Post-processing with an electron microscope allows a more detailed observation of the result like shapes, dimensions, hybridization, etc. The infiltration process takes place uniformly to have the entire nanostructure partially filled with a uniform coating. Porosity is close to uniform.

If it is a partial infiltration of silica, the partially infiltrated surface has already surface chemistry properties desirable for measuring certain analytes, e.g. water. For the partial infiltration of carbon, since the surface is hydrophobic, additional functionalization process is needed for making a water sensor. Additional functionalization processes can also be carried out for trapping other different kinds of target elements and molecules. Functionalization can be achieved by means of surface treatment and coating, which presents a specific structure or consists of an specific element or a molecule having particular properties to bind to target elements or molecules.

The figure 1 illustrates a cross sectional diagram of a nanostructure attached to an end surface of an oscillator. A nanostructure 11 is in the form of a 3D nanoporous mass, which comprises matrices of carbon nanotubes 12 as a scaffold supporting the whole structure. The infiltrated material 13 coats the sides walls of the nanotubes so that the free space between the interior walls of the nanotubes is also filled by the infiltrated material. Partial infiltration means that the free space between the walls of the nanotubes is not fully filled so that the empty space between the walls still exposes a large porosity, whose value depends on the thickness of the infiltration coating. The infiltrated material locks/freezes the matrices of nanotubes to form a single/monolithic solid structure. When the partially infiltrated nanostructure is put inside the medium of gas or liquid, the internal motion of the nanotubes is eliminated. Before the infiltration, the matrices of nanotubes generate internal energy dissipation in the media like a forest of bamboo swinging with the wind. After the infiltration, the matrices of nanotubes are transformed to a forest of solid pillars, which become thicker and stronger to eliminate any motion, the CNTs do not swing any more.

The infiltration can influence the physico-chemical nature of the nanostructure to enable certain functionality of the surface. It is also possible to apply other treatments or coating that can change the chemical properties of the surface. The functionalization process can be realized but not limited to:

- Acid/base treatment
- Ozone treatment
- Plasma Treatment
- Attaching biomolecules
- Attaching other chemical compounds
- Annealing
- Thin material coating
- Some combination of the above

As illustrated in the figure 1, the generated nanostructures have a functionalized surface area 14 attached on the surface of the infiltrated material 13. The functionalized surface is able to trap and to characterize different kinds of molecules. The same fabrication principles can be used for infiltrating other elements, like metallic, organic or inorganic polymer.

For partial infiltration, a variety of materials can be used, including silicon, polymers, or amorphous carbon. The main criterion for the infiltration material is that it must be able to cover the nanotubes and have desirable surface properties or be able to be surface functionalized.

The partial infiltration coats the inner and outer side walls of the nanotubes scaffold and fills the free space between the interior side walls of the nanostructure, so that 4% - 80% of the nanostructure's total internal volume is filled with infiltration coating. The partial infiltration makes the nanostructure becomes a rigid monolith block.

After the partial infiltration with or without functionalization, the nanostructure can be physically moved from the fabrication substrate to the ultimate device, e.g. oscillator, because of its rigidity. Optionally, one external surface of the matrices can be treated to form a solid base. This base can be realized by different methods, for example, plasma enhanced chemical vapor deposition (PECVD), or atom layer deposition (ALD). By using hand tools or plasma flow, the fabricated nanostructure is detached from its manufacturing support and is ready to be used for the oscillator. The thus extracted nanostructure is fixed on the oscillator at the end of the cantilever beam by means of a molecular-type bonding. The ideal situation would be an interface that does not affect the accuracy of the sensor, for example a poor reproduction of masses or an influence of variations in inertia of bonding elements.

As illustrated in the figure 1, the glue 15, e.g. epoxy is applied to attach the nanostructure 11 to the oscillator 16.

In another embodiment, the nanotubes inside the partial infiltrated nanostructure can be burned out using oxygen or water at high temperature (>500 C for $O_2$, >700 C for $H_2O$). After the burning out process, the nanotubes as the scaffold of the nanostructure is removed, leaving the infiltrated material inside the nanostructure. This burning out step increases the surface area per volume, because the area occupied by the nanotubes scaffold becomes empty and porous. Meanwhile, the removed nanotubes effectively lead to the mass reduction of the whole nanostructure.

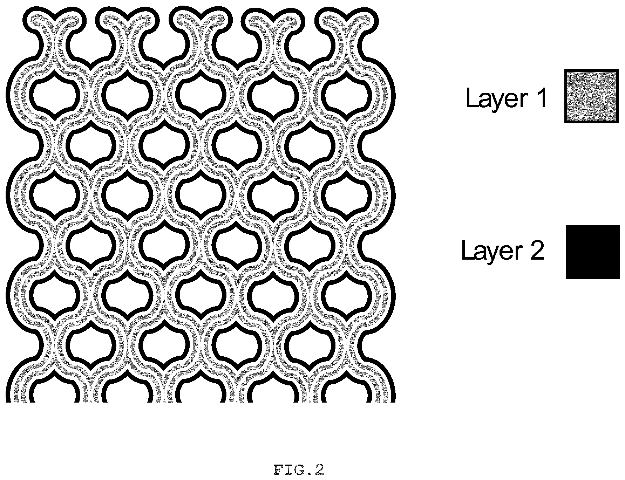

In another embodiment, several layers of different infiltration materials can be applied to generate hybrid structure during the partial infiltration. The figure 2 is a cross sectional diagram of a nanostructure with two super imposed infiltration layers. This nanostructure is realized in the following manner. Firstly, a matrix of vertically aligned carbon nanotubes (VACNT) is generated. Secondly, a first infiltration layer is coated on the VACNT. Thirdly, a sacrificial layer is coated on the first infiltration layer. Fourthly, a second infiltration layer is coated on the sacrificial layer. Fifthly, the VACNT and the sacrificial layer are removed. For example, if the sacrificial layer is carbon, both the VACNT and the sacrificial layer can be removed together by burning using oxygen or water at high temperature (>500 C for $O_2$, >700 C for $H_2O$). It is also possible to add more than two layers of infiltration material interspersed with sacrificial layers that can be removed by burning or etching. This multilayer process can dramatically increase the surface area of the device and could be applied to other nanoporous structures (e.g. mesoporous silica or activated carbon) as well. Surface area per volume is generally reported in $\frac{m^2}{cm^3}$. For a matrix of VACNT as grown, it is generally <50 $\frac{m^2}{cm^3}$. The infiltration increases it to ~100 $\frac{m^2}{cm^3}$. Removing the nanotubes by burning out process could further increase it to 125 $\frac{m^2}{cm^3}$. The multilayer process could increase it to ~500 $\frac{m^2}{cm^3}$ for a second layer, to ~800 $\frac{m^2}{cm^3}$ for three layers structure, and up to ~2000 $\frac{m^2}{cm^3}$ for seven total coating layers. With added layers it could be necessary in certain embodiments to etch or to polish either the top or bottom of the structure for a small amount in order to expose the internal pores to the environment. The etched or polished side will not be the side of the solid base that is to be adhered/attached to the oscillator.

Conclusion, it is possible to influence the following parameters of the nanostructure:

> Pitch between the nanotubes (intervals between nanotubes in a two-dimensional plane),
> Growth height of the nanotubes, and therefore contact and detection surface,
> Degree of partial infiltration between the tubes,
> chemical functionalization of surfaces (deposits of other elements, structuring, activation, etc.),
> multi-layered composition in a more elaborate form, mono.

The advantages are following:
Increased resolution

There are several aspects that increase the resolution.

a. Increased surface area

For most mass sensor applications, the resolution is inversely proportional to the amount of surface area onto which molecules can adsorb. The key measurement parameter of the nanoporous structure is surface area per volume, which is dramatically increased as explained in the fabrication steps. Thus, a fine resolution can be achieved.

b. Minimally decreased quality factor

Each layer of the nanoporous structure is a fully monolithic structure. In the sense that there is not internal motion that can further dissipate energy to the air and lower the quality factor significantly.

c. Ideal, repeatable shape

Because the catalyst is lithographically defined and the forest walls project directly from the edges of the catalyst, we can fabricate the ideal shape for the nanoporous mass to maximize the amount of volume (and thus surface area) added. Furthermore, this makes the exact size of the nanoporous mass repeatable. Most nanoporous structures in the state of the art are added to oscillators either as a deposited mat layer with minimal volume or as a droplet or pile of some kind whose shape is not ideal to take advantage of all of the space. It is also possible to add microscale pores if we run into issues with diffusion time into the forest. These pores would be added by adding holes to the catalyst layer.

Material flexibility

Infiltration of the nanotubes instead of using the native nanotubes opens the possibility to use many types of materials without sacrificing the superior growth properties of the VACNTs. CNTs can be grown orders of magnitude higher and more densely than other nanotubes. There are many applications for which carbon and particularly CNTs are not well suited. For example, a humidity sensor that operates by measuring the mass of adsorbed water. CNTs are hydrophobic which decreases the amount of adsorbed water compared with other materials (e.g. silica).

Ease of manufacturing

In the state of the art, most nanostructures are not locked together, they are difficult to manipulate, particularly for vertically aligned forests. This is why in most instances they are grown directly onto the structure of the final device which complicates manufacturing (including limiting materials from which the device can be made because they must be growth compatible) and decreases throughput because additional space in the growth reactor is taken up by the portions of the device that nanotubes are not being grown on.

By locking the nanostructure together, they can be grown in a high-density array on an idea substrate and then be physically transferred to the final device. This also makes the nanostructures compatible with basically all off the shelf oscillators.

Oscillator

In the present invention, a high-quality factor mechanical oscillator is used. The advancement of machining technology makes it possible to optimize the quality factor of an oscillator fabricated in the nanometer and micrometer scales. At these scales, the mass being very low, which determines that a good quality factor can only be obtained for high frequencies. For the usage in the air and liquid environment, it is important to take into account the aeroelastic behavior to minimize the viscous friction.

One embodiment is to use a commercially available quartz "cantilever" MEMS type oscillator as in the document US7814776.

Another embodiment is to fabricate the oscillator using DLC (Synthetic Diamond) (Sp3) substrates to achieve very high frequency (GHz) fabrication, and based on SAW (Surface Acoustic Waves) technology. The supporting structure could be the known substrate / diamond / piezoelectric (ZnO) composite. SAW components are manufactured by electronic lithography, which lends itself perfectly to the monolithic structures based on flexible mechanics. It is known from the state of the art that such devices achieve QF (quality factor x frequency) products greater than $10^{12}$.

Another embodiment is to fabricate the cantilever by the process of growing a nanostructure with matrices of nanotubes that are fully infiltrated. By selecting the properties and the dimensions of the nanotubes (DRIE silicon, multilayer etc.), it is possible to create an oscillator, for which the quality factor is as good as, or even better than the commercial quartz oscillator. For the above three embodiments, the nanostructure is transported from its fabrication substrate to the oscillator.

Another embodiment is a compliant monolithic structure by growing both a high-quality factor oscillator and the nanostructure together.

No matter which fabrication method is used, the oscillator shape is optimized to have better aeroelastic behavior, thus limiting viscous friction, and the nanostructure shape is optimized being ideal to fit the oscillator.

Molecular detectors

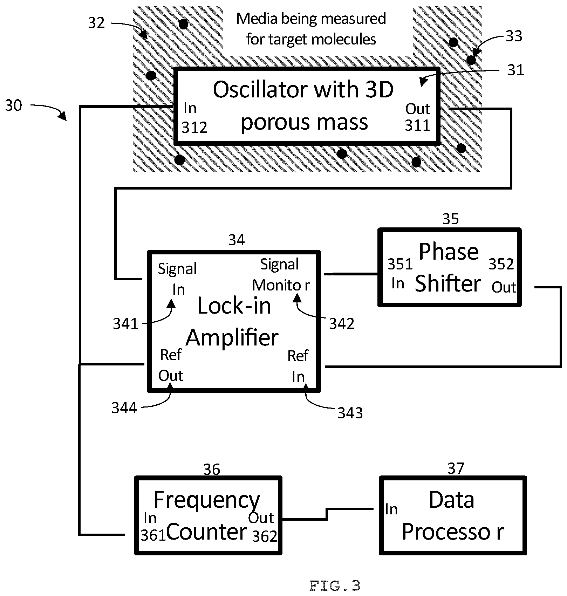

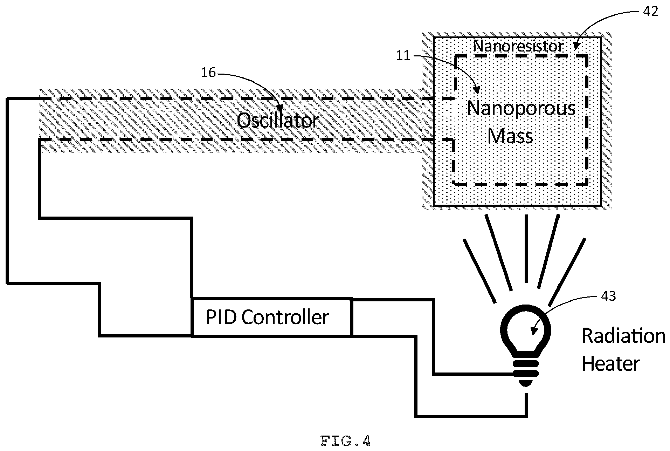

For fabricating a molecular detector 30, a 3D nanoporous mass 11 is added on one end of the cantilever beam of the oscillator 16 as illustrated in the figure 4. It is possible to add on the oscillator multiple nanostructures, arranged in different forms. This oscillator with 3D porous mass is the sensor head 31 in the figure 3. Figure 3 is a diagram of an oscillator control system. The sensor head 31 is embedded in a media 32, which contains the target molecules 33 and elements to be measured or detected. When the target molecule 33 is captured by the 3D nanoporous mass 11 of the sensor head 31, an output signal 311 is transmitted to the input signal 341 of a lock-in amplifier 34, which generates a monitor output signal 342. The phase shifter 35 has two channels: input 351 and output 352. The output signal 342 is fed into the phase shifter input 351 to generate the phase shifter output 352. The phase shifter output 352 is transmitted to the reference input 343 of the lock-in amplifier. The reference output 344 of the lock-in amplifier has two paths. One path is fed back to the input 312 of the sensor head 31 in order to lock the oscillator to its resonant frequency. Another path is fed to the input 361 of a frequency counter 36. The output 362 of the frequency counter 36 generates a signal to be treated by a data processor 37.

The above explanation is based on the function of only one sensor head 31. In a molecular detector 30, an array of sensor heads can be arranged to achieve different modes of detections. Several examples of detection modes are explained in the following paragraphs.

The detection modes depend on the selective trapping of the functionalized surface. The functionalized surface has the characteristic of selectively trapping target molecules and elements. This selective trap offers the enormous advantage of adapting the sensor to what one wishes to detect or measure. There are as many possible traps as there are species to be detected. The "robustness" of the surface functionalization depends largely on the material. It is important to note that infiltration of the polymer type allow particularly robust functionalization. Surface functionalization is not always necessary. For example, a humidity sensor made using a silicon or silicon oxide infiltration would likely not need a surface functionalization.

For example, in one embodiment, a system comprises many molecular detectors, e.g. integer number N, with each molecular detector trapping the same kind of target molecules, so that the sampling data of the N molecular detectors together allows a statistical processing of the analysis carried out in the data processor 37.

In another embodiment, a system comprises many molecular detectors, e.g. integer number N, with at least one type of molecular detector trapping at least one different kind of target molecules, so that the system is composed of N molecular detectors assembled together to a multi-molecules detector.

In another embodiment, many sensors with different functionalizations could be used and a certain combination of responses could be an early warning sign for a particular type cancer or a sign of bed bugs, but the underlying mechanisms of what molecules are being adsorbed might not be known.

It is also possible to use a sensor to account for cross talk. For example, many of the sensors could be sensitive to humidity level, but by including a version that only detects humidity that other sensor outputs can be adjusted to remove the effect of changes in humidity.

It is also possible to have many different sensors with different functionalizations where each functionalization is not intended to target a particular molecule, but the data from all the sensors together gives relevant data.

Thermal stabilisation

In order to improve the measurement accuracy, the sensor head can be thermal stabilized. FIG.4 is a diagram of heat compensation, which illustrates one example of the thermal stabilization for the sensor head, especially the 3D nanoporous mass 11 and/or the oscillator 16.

In one embodiment, a thermal compensation element is introduced into the sensor head to maintain a constant temperature. The thermal compensation element can be integrated to the porous mass and/or the oscillator. For the oscillator 16 made from a matrix of nanotubes forest, it is quite possible to integrate into the design of the oscillator a thermal nanocompensator of the "bimetal" type which can couple the dimensional parameters and the mass parameters, but also integrate multilayer coatings of the silicon oxide type or other. This type of compensator can be made using nanotubes or beams made from fully infiltrated nanotube forests and from a different species than that of the oscillator (boron, gold, and silicon in particular).

For the porous mass 11, it is possible to integrate nano heating resistors in the form of nanowires embedded in the porous mass. The figure 4 shows an example of a nanoresistor 42 embedded under the 3D nanoporous mass 11. It is also possible to put the nanoresistor over the mass, or to run through the mass, or even the nanoporous mass could be conductive itself.

In fact, for the embodiment of a compliant monolithic structure with the high-quality oscillator and the 3D nanoporous mass grown together, the nanowires for the 3D nanoporous mass are a part of the beam forming the oscillator.

For the thermal stabilization, it is necessary to detect and to compensate the temperature. The nanoresistors in the form of integrated nanowires can be used as a thermometer for probing the temperature. Nanoresistors can also allow dynamic active control of temperature to realize the compensation. A concrete example of the thermal compensation is given by using a matrix of carbon nanotubes, because the sensor based on carbon nanotubes allows greater analysis dynamics insofar as carbon nanotubes are excellent conductors of heat (balance of gradients, temperature stability, etc.).

In another embodiment, a thermal drain can be integrated into the sensor head to maintain a constant temperature.

Still in another embodiment, the oscillator includes a mechanical compensation device calculated to be efficient in the thermal spectrum of the use considered. The compensation can be done by means of a mechanical form that can expand and form counter effects, or by using a multilayer structure, whether metallic or not, at least one of which inhibits the induced expansion or shrink effect.

The thermal compensation is a good alternative solution to mechanical compensation devices. However, adding wires is a compromise, because the increase of the mass, to some extent, decrease the frequency resolution and the quality factor. Thus, as illustrated in the figure 4, in still another embodiment, a radiant heater 43, for example, Infrared source or microwaves, can be used to heat the sensor head. The temperature of the nanoporous mass 11 can be monitored either by the nanoresisitors 42 or by a remote infrared detector. The temperature variation is fed back to a proportional integral derivative controller (PID controller), in order to control the intensity of the heater.

One example of a high resolution, low cost humidity sensor

In one concrete embodiment, the target molecule can be water. A matrix of VACNTs is grown by specifying the diameter of the nanotubes, the pitch between the nanotubes, the 3D dimensions and shape of the nanostructure. This matrix of VACNT is partially infiltrated with silica to make the surface become Hydrophilic. Several layer of alternating infiltration of silica and a sacrificial layer (possibly carbon) can be applied to further increase the surface area of the nanoporous mass. The sacrificial carbon layers and the CNTs can be removed by exposure to oxygen at 500°C. At the end of processing, the nanoporous mass is adhered to a high quality oscillator, for example, a quartz crystal to realize the sensor head for water.

Claims

1. Molecular detector 30 comprising:

    - A oscillator 16;
    - A nanostructure 11 located on a surface of the oscillator 16;
    - A frequency counter configured to measuring a frequency change as a function of a mass change of the oscillator in response to a mass loading effect of target molecules 33 on the nanostructure 11, as a media 32 comprising the target molecules 33 flow into and through the nanostructure 11, the media 32 comprising at least one of a gas or a liquid;
- Wherein the nanostructure comprises a three-dimensional (3D) nanoporos mass with a surface area per volume of at least 50 $M^2/cm^3$,
- Wherein the 3D nanoporos mass forms a single/monolithic solid structure with a partial infiltration coating 13 so that the internal motion is eliminated to minimize internal energy dissipation in the media.

2. Molecular detector of claim 1, wherein the 3D nanoporos mass 11 is made of a matrix of nanotubes or nanorods 12 realized in the material among carbon, boron nitride, silicon.

3. Molecular detector of the precedent claim, wherein the 3D nanoporos mass is made from a vertically aligned carbon nanotubes arrays (VANTAs).

4. Molecular detector of claim 1, wherein the partial infiltration is to infiltrate the 3D nanoporos mass by a material selected among metal oxides (TiO2), ceramics (Si), polymers, metals (Ni), other allotropic forms of carbon.

5. Molecular detector of claim 1, wherein the partial infiltration 13 is to coat the side walls and to fulfill the free space between the interior side walls of the nanostructure so that 4% - 80% of the nanostructure's total internal volume is filled with infiltration coating.

6. Molecular detector of the claim 1, wherein the 3D nanoporos mass has a controllable porosity by controlling the diameter of the nanotubes/nanorobes, the pitch between the nanotubes/nanorobes, the thickness of the infiltrated coating on the nanotubes.

7. Molecular detector of the claim 1, wherein the nanostructure has a surface area per volume of least 500 $M^2/cm^3$ by superimposing multi-layers of infiltrated 3D nanoporos masses.

8. Molecular detector of the claim 1, wherein the oscillator is a high-quality factor mechanical oscillator.

9. Molecular detector of the precedent claim, the oscillator comprises a quartz crystal cantilever system.

10. Molecular detector of the claim 1, wherein the oscillator is fabricated using a monolithic structure made from a fully infiltrated matrix of nanotubes or nanorods (In this case the mass will be low and the frequency high to improve the quality factor).

11. Molecular detector of the precedent claim 1, wherein the nanostructure is grown directly on the oscillator and is fixed permanently on the oscillator.

12. Molecular detector of the precedent claim 1, wherein the nanostructure is fixed on the surface of the oscillator by a technique selected from chemical boning, vacuum deposition, pop-up folding and in situ growth.

13. Molecular detector of the claim 1, wherein nano resistors 42 are integrated into or on the surface of the nanostructure to heat or to measure the temperature of the mass, which provides a dynamic temperature compensation and temperature control.

14. Molecular detector of the claim 1, wherein a radiation heater 43 is realized by infrared or microwave illumination, which can be combined with temperature sensing, either by radiation or using nanoresistors, to dynamically control the temperature.

15. Molecular detector of claim 1, wherein the 3D nanoporos mass is with a functionalized surface 14 to selectively trap the target molecules in the media.

16. Molecular detector of claim 1, wherein the target molecules are water, proteins, disease marker, aroma compounds, explosives pollutants, glucose, alcohols.

17. A system comprises N molecular detectors of the claim 1, wherein each of the N molecular detectors traps the same kind of target molecules so that the data of the N molecular detectors allows a statistical processing of the analysis (sampling).

18. A system comprises N molecular detectors of the claim 1, wherein at least one type of the N molecular detectors traps at least one different kind of target molecules, so that the N molecular detectors are assembled together forming a multi-molecules detector.

19. A system comprises N molecular detectors of the claim 1, wherein the N molecular detectors possess different surface chemical properties to present different levels of responses to different kinds of single molecule, so that the collective behavior of the N molecular detectors gives additional analysis results than the N.

VACNTs ▪ 12

CNT
Coating ▦ 13

Functionalized
Surface ▦ 14

Oscillator ▤ 16

Epoxy ▥ 15

13 — **3D Porous Mass** 11 — 12

14 —

15

16

FIG.1

Layer 1

Layer 2

FIG.2

FIG.3

FIG.4

Europäisches
Patentamt

European
Patent Office

Office européen
des brevets

## EUROPEAN SEARCH REPORT

Application Number

EP 21 15 6771

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/123930 A1 (NOYCE STEVEN [US] ET AL) 5 May 2016 (2016-05-05) <br> * abstract * <br> * paragraphs [0030], [0031], [0033], [0035], [0038], [0040], [0042], [0043], [0060], [0067], [0068], [0076], [0078], [0080], [0082], [0084], [0088] * | 1-11,16 | INV. <br> G01N29/02 <br> B82Y15/00 <br> G01N29/036 <br> H01L41/113 |
| X | US 2007/237705 A1 (ITOH KEN-ICHI [JP] ET AL) 11 October 2007 (2007-10-11) <br><br> * abstract * <br> * paragraphs [0003], [0009], [0071], [0081], [0084], [0088], [0096], [0116], [0154], [0155], [0158], [0160], [0164], [0169] * | 1-3,5,6, 8,12, 15-19 | |
| X | US 2018/074024 A1 (SCHLERETH FRITZ H [US] ET AL) 15 March 2018 (2018-03-15) <br><br> * abstract * <br> * paragraphs [0004], [0022] - [0026], [0030], [0034], [0053] - [0055], [0068], [0069], [0071] - [0073], [0079] * | 1,5,6,8, 13-15, 17-19 | TECHNICAL FIELDS SEARCHED (IPC) <br><br> G01N <br> B82Y <br> H02N <br> H01L |
| X | US 2020/240953 A1 (CLARET THIERRY [FR] ET AL) 30 July 2020 (2020-07-30) <br> * abstract * <br> * paragraphs [0002], [0003], [0012], [0013], [0015], [0017], [0024], [0058], [0059], [0063], [0067] - [0069], [0071], [0073], [0084], [0088], [0101]; figure 12A * <br> * paragraph [0114] * | 1,5,6,8, 15 | |

-/--

The present search report has been drawn up for all claims

| Place of search | Date of completion of the search | Examiner |
|---|---|---|
| Munich | 25 June 2021 | Filipas, Alin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

# EUROPEAN SEARCH REPORT

Application Number

EP 21 15 6771

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/006871 A1 (UCHIDA TATSUYA [JP] ET AL) 12 January 2006 (2006-01-12) * abstract * * paragraphs [0001], [0009], [0034] - [0036], [0038], [0039], [0041], [0042] * | 1,5,6,8, 15 | |
| Y | US 6 171 687 B1 (LEUNG ROGER [US] ET AL) 9 January 2001 (2001-01-09) * column 1, line 5 * * column 2, line 47 - column 3, line 6 * | 1-19 | |
| Y | US 2015/308990 A1 (ANDREUCCI PHILIPPE [FR] ET AL) 29 October 2015 (2015-10-29) * paragraphs [0024] - [0026], [0050], [0209], [0217] * * abstract * | 1-19 | |
| X,D | US 7 814 776 B2 (PENN STATE RES FOUND [US]) 19 October 2010 (2010-10-19) * column 4, line 63 - column 5, line 37 * * column 6, lines 3-11 * * column 7, lines 26-48 * | 1,2,5,6, 8,9 | TECHNICAL FIELDS SEARCHED (IPC) |
| Y,D | US 10 495 607 B2 (PUTKARADZE VAKHTANG [CA]; PHANI ARINDAM [CA] ET AL.) 3 December 2019 (2019-12-03) * column 2, lines 48-53 * * column 4, line 24 - column 6, line 21 * * column 8, lines 15-20 * * column 12, line 62 - column 13, line 6 * | 1-19 | |

The present search report has been drawn up for all claims

| Place of search | Date of completion of the search | Examiner |
|---|---|---|
| Munich | 25 June 2021 | Filipas, Alin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

# EP 4 043 875 A1

## ANNEX TO THE EUROPEAN SEARCH REPORT
## ON EUROPEAN PATENT APPLICATION NO.

EP 21 15 6771

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2021

| Patent document cited in search report | | | Publication date | Patent family member(s) | | | Publication date |
|---|---|---|---|---|---|---|---|
| US 2016123930 | A1 | | 05-05-2016 | NONE | | | |
| US 2007237705 | A1 | | 11-10-2007 | CN | 101070154 | A | 14-11-2007 |
| | | | | DE | 102007014880 | A1 | 11-10-2007 |
| | | | | JP | 2007268692 | A | 18-10-2007 |
| | | | | US | 2007237705 | A1 | 11-10-2007 |
| US 2018074024 | A1 | | 15-03-2018 | US | 2018074024 | A1 | 15-03-2018 |
| | | | | US | 2019219545 | A1 | 18-07-2019 |
| | | | | WO | 2018049101 | A1 | 15-03-2018 |
| US 2020240953 | A1 | | 30-07-2020 | EP | 3490928 | A1 | 05-06-2019 |
| | | | | FR | 3054665 | A1 | 02-02-2018 |
| | | | | US | 2020240953 | A1 | 30-07-2020 |
| | | | | WO | 2018020130 | A1 | 01-02-2018 |
| US 2006006871 | A1 | | 12-01-2006 | CN | 1678899 | A | 05-10-2005 |
| | | | | EP | 1548421 | A1 | 29-06-2005 |
| | | | | US | 2006006871 | A1 | 12-01-2006 |
| | | | | WO | 2004023108 | A1 | 18-03-2004 |
| US 6171687 | B1 | | 09-01-2001 | AT | 292320 | T | 15-04-2005 |
| | | | | AU | 1210101 | A | 30-04-2001 |
| | | | | DE | 60019149 | T2 | 26-01-2006 |
| | | | | EP | 1226589 | A1 | 31-07-2002 |
| | | | | JP | 2003512742 | A | 02-04-2003 |
| | | | | KR | 20020075363 | A | 04-10-2002 |
| | | | | US | 6171687 | B1 | 09-01-2001 |
| | | | | WO | 0129847 | A1 | 26-04-2001 |
| US 2015308990 | A1 | | 29-10-2015 | EP | 2878942 | A1 | 03-06-2015 |
| | | | | JP | 6403777 | B2 | 10-10-2018 |
| | | | | JP | 2017502269 | A | 19-01-2017 |
| | | | | US | 2015308990 | A1 | 29-10-2015 |
| | | | | WO | 2015082956 | A1 | 11-06-2015 |
| US 7814776 | B2 | | 19-10-2010 | US | 2009145233 | A1 | 11-06-2009 |
| | | | | WO | 2006112883 | A2 | 26-10-2006 |
| US 10495607 | B2 | | 03-12-2019 | CA | 2918010 | A1 | 16-07-2016 |
| | | | | US | 2016209369 | A1 | 21-07-2016 |
| | | | | WO | 2016113701 | A1 | 21-07-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7814776 A
- US 10495607 B
- US 7814776 B